# EUROPEAN PATENT APPLICATION

(11) **EP 2 907 869 A1**
(43) Date of publication of application: **19.08.2015**
(21) Application number: 14155170.5
(22) Date of filing: 14.02.2014
(51) Int. Cl.: C11C 3/00, C10L 1/02

(54) **Biofuel production from fatty acid rich feedstock**

(71) Applicant: Lafleur, Christof, 1050 Wien (AT)
(72) Inventor: Lafleur, Christof, 1050 Wien (AT)
(74) Representative: Bogensberger, Burkhard

(57) **Abstract**

The present invention relates to a method of continuously making a liquid biodiesel product from FFA-rich vegetable and/or animal oil or fat feedstock, wherein esterification of the FFA is carried out in a first biofuel reactor (1) equipped with binary fluid pneumatic nozzles (3,5) utilizing an inert gas as a carrier gas for feeding aerosols (7) of oil and alcohol components into the reactor, and allowing the esterification reaction to take place thus yielding a first reaction mixture (8); and wherein in a second step a phase separation is carried out to yield a light phase (9) comprising fatty acid alkyl esters (FAAE) and unreacted glycerides, and a heavy phase (10) comprising excess alcohol, catalyst, and water; wherein the phase separation is carried out by means of an integrated phase separator device (11) comprising at least one demister or coalescer unit (13).

The invention further relates to means and methods for purification of the crude biodiesel reaction mixture and for recovering and recylcing at least part of unreacted starting materials and reaction by-products.

## Description

### TECHNICAL FIELD

The present invention is in the field of chemical conversion of oils, fats, and fatty acids into liquid biofuels that are suitable for use in combustion engines.

### BACKGROUND

In view of the currently harsh market situation for almost all kinds of technology relating to the generation and/or distribution of renewable energy it has become imperative to further develop existing technologies in addition to searching for new approaches for renewable energy supply. It has long been known that triglycerides from fats and oils can be used as fuels for diesel engines. However, in the past such use frequently resulted in engine failure due to insufficient quality of said oily biofuel. It has therefore been proposed to chemically convert the fat/oil feedstock by trans-esterification of the glycerides contained therein into a liquid biofuel composed primarily of simple esters of fatty acids such as methyl and ethyl esters. The term "biodiesel" has been generally accepted in the art and in the public for said fatty acid methyl or ethyl ester biofuel liquids, usally abbreviated by the acronyms FAME or FAEE or more generally FAAE (fatty acid alkyl ester).

Industrial processes for biodiesel production have been known for many years. However, over the last few years the situation has turned quite unfavorable for the biodiesel producers, at least partly due to the fact that feedstock cost has become a major economical factor in the overall production cost for biodiesel. Contemporary biodiesel production facilities usually need feedstock having low, i.e. less than 15% by weight, free fatty acid (FFA) content in order to be able to handle the industrial scale conversion process with usual technical equipment and without expensive special materials or coatings to protect reactor vessels and piping against the action of considerable amounts of strong acids needed for esterification of FFAs. Whereas feedstock rich in FFA, e.g. comprising more than 50% of FFA, would be much cheaper and therefore would in principle be preferred by the biodiesel producers.

In Europe quite a number of biodiesel production sites have already closed down or are about to shut down because they can no longer be operated profitably due to the impact of the feedstock cost on the price of the end product. Taking into consideration that the feedstock cost currently contributes to more than 70% and even up to around 90% of the total production cost of most conventional biodiesel production plants, the desastrous situation becomes better understandable. In order to be widely accepted and commercially viable as an alternative liquid fuel, biodiesel must be price competitive to conventional fossile hydrocarbon diesel, i.e. without governmental subsidies.

In order to tackle these problems, US 2014005424 has reported a method of converting low value, high FFA feedstock into biodiesel, wherein the process starts with reacting the free fatty acids (FFA) with glycerin to yield glycerides and to subsequently subject the newly generated glycerides together with the initially present glycerides to trans-esterification using a C1-C5 alcohol to yield fatty acid alkyl esters (FAAE).

On the other hand, US 7452515 discloses a process of trans-esterifying feedstock rich in triglycerides with methanol to produce fatty acid methylesters which after proper purification can be used as liquid fuels (i.e. "biodiesel") in combustion engines, essentially without the need of adjusting the combustion engines to the biodiesel. The process comprises passing the fat or oil feedstock as well as the methanol component through atomizer nozzles into a reaction chamber wherein trans-esterification takes place rather quickly and primarily in the gaseous phase.

### BRIEF DESCRIPTION OF THE INVENTION

It is therefore an object of the present invention to further develop the known processes disclosed above, in order to provide an economically viable method for the production of biodiesel from the conversion of fats, oils and free fatty acids of whatever origin into their corresponding esters with short-chain alcohols. This goal is achieved by the process and apparatus defined in the independent claims.

The present invention is directed to a method of efficiently converting feedstock from animal and/or vegetable oils and fats, especially containing high contents of free fatty acids (FFA), into premium quality biodiesel.

One of the factors substantially contributing to reaching this goal is the establishment of a continuously operating conversion and purification process, based on the method disclosed in US 7452515, i.e. based on chemical esterification or trans-esterification in an aerosol phase.

A second factor is the use of best suitable atomizer technology for generating the desired aerosols for the esterification or trans-esterification reactions, and in particular the use of binary liquid nozzles using nitrogen as an inert gas carrier, which additionally generates an inert gas atmosphere in the biofuel reactor and thereby reduces the risk of explosions.

A third factor contributing to the improved overall process economy is the novel design of the core biofuel reactor, i.e. a combined setting for both the chemicial conversion reaction and the subsequent phase separation within the biofuel reactor unit.

It is one of the biggest advantages of the present invention that the aforementioned factors can also be transferred to many existing biodiesel production plants which are ineconomically operating using conventional stirred vessel technology in batch processes.

Since FFAs are not linked to a glycerine backbone, esterification of FFAs does not release "waste glycerol" which has in effect that the overall biodiesel output may substantially exceed 100% by weight, as compared to the biodiesel output from low-FFA or FFA-free feedstock.

### DETAILED DESCRIPTION OF THE EMBODIMENTS

The technical equipment required to produce biodiesel is known in the art and can, for example, be essentially the same as the one disclosed in US 7452515, the whole contents of which are herewith enclosed by reference. A person of ordinary skill in the art will understand, however, that the present invention can be practiced in various ways using different apparatuses and technical equipment without deviating from the essence of the present invention.

Generally, the invention relates to an improved process of subjecting a vegetable or animal fat, oil or free fatty acid (FFA) feedstock, or any mixture thereof, to at least one step of acidic esterification of free fatty acids, and/or to at least one step of trans-esterification of glycerides, i.e. of mono-, di- and triglycerides, the improvement being brought about at least in part by the use of pneumatic binary fluid nozzles instead of pressurized single-fluid nozzles for generating reactive aerosols of both the lipidic and alcoholic components, as hereinafter described in more detail.

The fat/oil/FFA feedstock may be selected from the group consisting of rapeseed oil, sunflower oil, soybean oil, palm oil, jatropha oil, cottonseed oil, white oil, any other vegetable oil, animal fat, used cooking oil, and combinations of these fats and oils.

Where the feedstock comprises less than about 5% by weight of FFA the chemical conversion process process will start with trans-esterifcation of the glyceride compounds by reacting the glycerides with a short chain C1-C5 alcohol, preferably methanol or ethanol, in the gaseous aerosol phase. If feasible or desired, a subsequent acidic esterification of the FFA may be carried out as well. Otherwise the chemical conversion will remain a one-step trans-esterfication procedure.

Where the FFA content exceeds 5% by weight of the feedstock a two-step conversion process will be preferred starting with an acid catalyzed esterification of the FFA in the first step and a base catalyzed trans-esterification of the remaining glycerides in the second step.

The conversion processes are followed by phase separation and purification of the resulting light and heavy phases. Optionally, recycle loops for feeding unconverted material back into the conversion reactor may be provided, as well as recycle loops for recovering washing liquids, excess short chain alcohol, acid or base catalyst or salts optionally generated by the various procedural steps. Where the feedstock comprises more than 5% by weight of FFA and preferably more than 50% FFA and up to 100% FFA, the conversion process according to the present invention will start with acidic esterification.

Depending on the purity of the feedstock material it may be feasible to subject the fat/oil feedstock to one or more purification steps prior to carrying out the esterification (in case of high FFA feedstock) or trans-esterification (in case of low FFA feedstock) processes. Said feedstock purification may comprise removal of particulate matter by filtration, which may possibly save a filtering step at the end of the biodiesel production process.

Also, it may be useful to subject the feedstock to a degumming step by treating the feedstock with an acid solution, for example with a phosphoric acid solution, prior to subjecting it to the esterification or trans-esterification step.

At any stage of the present process external loops may be provided to recylcle at least partial streams of esterified or trans-esterified reaction mixtures into the respective esterification or trans-esterification units for maximizing the overall conversion yield.

### Acidic esterification - the principle:

Prepurified FFA rich feedstock or pure FFA feedstock (for example originating from a recycle loop after FFA recovery from a saponified feedstock fraction) will be introduced into the biofuel reactor for acidic esterification. Said reactor may be similar to the reactor for carrying out the trans-esterification of glycerides, i.e. it may comprise a reaction chamber and two or more atomizers each having one or more, typically a plurality, of spray nozzles for supplying the reactants, i.e. FFA, alcohol, catalyst, into the reaction chamber by way of fine aerosols. The esterification reactor has at least one inlet for the FFA stream and at least one other inlet for introducing the short chain alcohol into the reaction chamber. Usually, the acid catalyst, typically a strong mineral acid such as sulfuric acid, is fed into the reaction chamber along with the alcohol component, at a concentration typically of 1 - 2% by weight of the alcohol/catalyst mixture. In order to avoid the introduction of water into the process, the sulfuric acid is added to the short chain alcohol as a concentrated, i.e. 98-99% solution. The short chain alcohol used for esterifaction of the FFAs is typically selected from the C1 - C5 branched or unbranched short chain alcohols, and usually is ethanol, methanol, or any combination thereof. It is typically applied in a hyper-stoichiometric amount relative to the esterifiable components, and usually in a concentration of between about 20 % by weight and 25% by weight, relative to the feedstock material.

The reaction temperature for the esterification process is usually kept at or below 75 degrees centigrade but shall not drop below 60 C. For that purpose, the liquid FFA feed is preheated to the desired reaction temperature prior to entering the reaction chamber. After esterification the reaction mixture comprises, amongst others, fatty acid alkyl esters (FAAE), glycerides, minor amounts of glycerin, unreacted alcohol, water and acid catalyst.

The crude reaction mixture obtained after esterification may then be transferred to a separator unit for separating a lipidic light phase from an aqueous acidic heavy phase, whereafter the lipidic phase comprising the FAAEs and glycerides may be fed into another bioreactor for carrying out the trans-esterification of the still unreacted glycerides according to methods known in the art such as disclosed in US 7452515, or by using the equipment taught by the present invention.

### BRIEF DESCRIPTION OF THE FIGURES

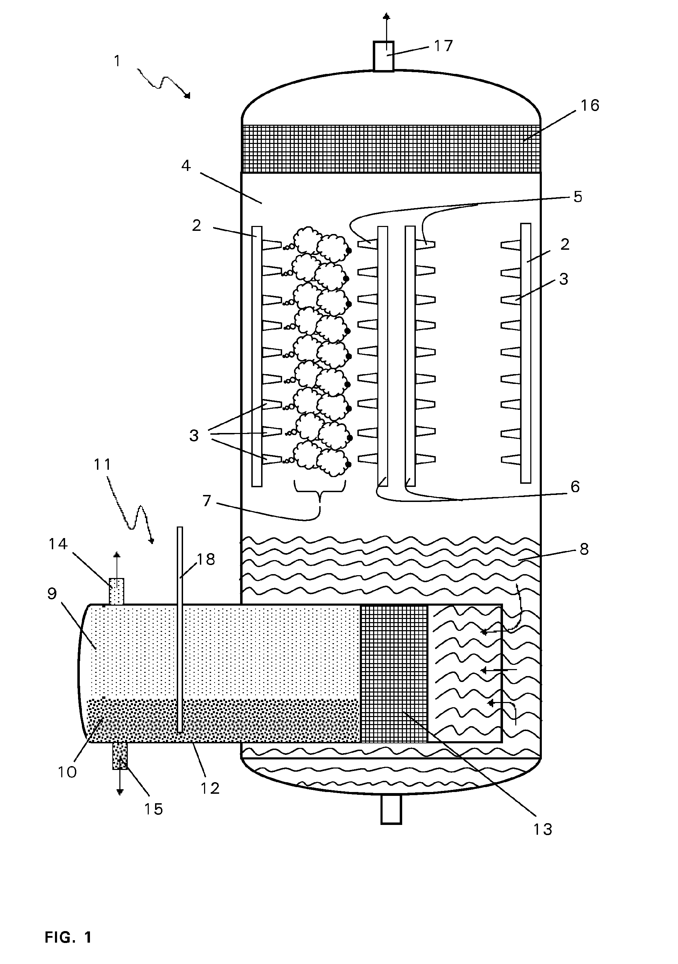

Fig. 1 is a schematic drawing of a combined esterification or trans-esterification reactor plus integrated phase separator.

In order that the invention be better understood the following examples are set forth.

### Example 1: Acidic esterification of feedstock comprising high FFA content

Feedstock material, optionally prepurified as discussed hereinbefore, comprising 50 % by weight or more of FFA is passed through a plurality of nozzles 3 of an atomizer device 2 into the reaction chamber 4 of an esterification reactor 1. Simultaneously, the short-chain alcohol is introduced into the same reaction chamber, preferably from an opposite side via one or more nozzles 5, typically via a plurality of nozzles, of another atomizer device 6. The short chain alcohol will in most cases be methanol or ethanol. If required for certain applications other alcohols may be used instead, such as, for example, a linear or branched-chain alcohol selected from the group consisting of a linear or branched-chain propyl alcohol (propanol), butyl alcohol (butanol), pentyl alcohol (pentanol), and any combination of the foregoing.

The short-chain, i.e. C1 - C5 alcohol may be supplemented with an acidic esterification catalyst prior to entering the reaction chamber via at least one of said spray nozzles or may be sprayed into the reaction chamber without catalyst, while the catalyst will be supplied to the reaction chamber separately.

Typically, concentrated sulfuric acid is used as a catalyst in the esterification reaction of FFAs. Other mineral acids or organic acids may also be suitable as catalysts for this purpose. The molar ratio of short chain alcohol to catalyst may be varied depending upon the given circumstances and may be adjusted to a value within a range of from about 3:1 to 25:1 ratios of alcohol to catalyst.

In the reaction chamber the vaporized reactants, i.e. FFA, alcohol, catalyst, are allowed to interact and to carry out the esterfication process, mainly in the aerosol cloud 7. The reaction temperature is typically maintained at a value in the range of 60 to 75 C for the esterification of the FFAs, for which purpose the feed liquids may be pre-heated to the respective reaction temperature prior to entering the reaction chamber.

Each atomizer device 2,6 is typically equipped with at least one spray nozzle 3,5, but may comprise a multitude of, for example, twenty or more spray nozzles. Where the reaction chamber 4 is connected with at least two atomizer devices, one feeding the fat/oil/FFA component and the other one feeding the alcohol+catalyst component into the reaction chamber, the atomizer devices and their respective spray nozzles may be arranged such that they are facing each other from opposite directions within the reaction chamber and are directed towards each other in a linear or angular relationship, wherein the angle spanned between a fat/oil/FFA feedstock nozzle and its co-operating alcohol spraying nozzle would typically be within a range of from 90 to 180 degrees.

This arrangement of the spray nozzles ensures most thorough mixing of the aerosol mists within very short time intervals, thus ensuring most efficient chemical interaction. The typical average contact or residence time of the reactants in the aerosol cloud 7 may vary from about 10 seconds to about 1 minute, but may in some cases even be less than 10 seconds, depending on the feedstocks and reaction conditions applied.

The average particle size of the aerosol droplets generated pursuant to the method disclosed in US 7452515 using single fluid pressurized nozzles is typically larger than 100 micrometer (um). Changing this concept from single fluid pressurized nozzles to binary fluid pneumatic nozzles significantly improved the course of chemical reactions in the aerosol cloud both in terms of velocity and conversion rate, which effect may primarily be due to a reduced average particle size of the aerosol of less than 100 um and a more favorable, i.e. narrower particle size distribution. The average particle size of the droplets generated by the binary fluid nozzles according to the present invention may typically be within a range of from about 100 to about 50 um, thus creating a much bigger contact area for the aerosol droplets to interact as compared to aerosols obtained by the method of US 7452515.

Also, the use of binary fluid pneumatic nozzles comes with additional positive side effects. For example, it allows for simplifying the piping equipment for the feedstock ducts because the feedstock material need no longer be transported under pressure. Moreover, binary fluid pneumatic nozzles tend to operate more stably and reliably and are typically less susceptible to clogging caused by the feedstock. Accordingly, endurance of these devices is significantly better than that of single fluid pressure nozzles, which of course also contributes to the overall production costs. In addtion, the binary fluid pneumatic nozzles may easily be cleaned on-site by backflushing with the carrier gas and in most cases need not be dismantled just for getting a clogged nozzle function again.

The selection of suitable pneumatic nozzles and their mode of operation is strongly dependent on the feedstock material to be sprayed into the reaction chamber 4. In one embodiment of the invention, pneumatic nozzles of the internal mixing type may be applied, wherein the liquid-atomizing effect is brought about by the pressurized carrier gas entering the nozzle from one side at high velocity and meeting the low-pressurized or pressure-free liquid stream inside the nozzle, creating therein a pre-aerosol which after passage through the nozzle outlet opening will be further comminuted by shear forces into even smaller droplets of a desired size. The carrier gas may be an inert gas such as nitrogen or argon. In an alternative embodiment, a binary-fluid nozzle of the so-called outer mixing type may be used. In this case the pressurized inert carrier gas meets the liquid component at the outlet opening when exiting the nozzle. Usually, the liquid exits the nozzle at a central area in the outlet opening, while the inert gas flow exits the nozzle via a ring channel surrounding said central area, thus creating the desired aerosol only at the edge of the outlet opening where the rapidly flowing pressurized carrier gas meets with the slowly moving liquid component.

While the inner mixing type nozzles may be perfectly suitable for vaporizing the low-viscosity alcoholic component it may be preferable to use the outer mixing type nozzles for the more viscous liquid of the fat/oil/FFA feedstock. In any case, the proper selection of the best suitable spray nozzle geometry for a given liquid fat/oil/FFA feedstock will yield the most reactive aerosols and hence the best conversion rate in the esterification reactions. It shall be mentioned at this occasion that the pneumatic nozzles may of course also be used for the transesterification reaction, although their use is especially beneficial for the acidic esterification process.

In any way, using the aerosol technology according to the present invention allows to considerably reduce the size and volume of the esterification and trans-esterification reactors from typically about 50 to 80 m³ down to about 1 to 5 m³ vessels. In addition, the aerosol technology allows for continuous operation of the conversion reaction and subsequent purification processes. Also, using the present production process and the corresponding modular equipment allows for simple exchange of units for cleaning or service purposes as well as for quickly adjusting the desired throughput in response to market or client demands.

By using inert gas such as nitrogen as a carrier gas for operating the pneumatic injection nozzles it is ensured that both the desired particle or droplet size of the aerosol is achieved and the intended inert gas atmosphere is built up within the reaction chamber of the biofuel reactor 1. Excess inert gas may be drained off via an outlet 17 on top of the reaction chamber 4 and recycled and redirected to the spray nozzles 3,5, thus more or less travelling in a loop, which also contributes to keeping the production costs at a low level.

The pressure difference for operating the inert gas stream may be in a range of from about 5 to 10 bar.

The aerosol droplets created in the empty head space of the biofuel reactor are allowed to perform the esterification reaction (or trans-esterification, as the case may be) at a predetermined reaction temperature of typically between 60 and 75 C. During the chemical reactions the droplets gradually settle by gravity and accumulate in the bottom space of the reactor forming a two-phase liquid reaction mixture 8, wherein the newly formed FAAEs and unreacted glycerides are mainly comprised in the light phase 9, while acid catalyst, excess alcohol, water from the esterification reaction, and other compounds are mainly comprised in the heavy phase 10.

In order to separate the light from the heavy phase after esterification the present invention provides a novel, cost-effective way to accomplish this task. Instead of transferring the two-phase reaction mixture to an external phase separator the esterification reaction chamber 4 of the biofuel reactor 1 is equipped with a phase separation unit 11 mounted to a bottom region of the reaction chamber and comprising a hollow tube 12 extending from the interior of the reaction chamber to the exterior and being arranged in a horizontal direction, wherein the one end of the tube 12 which is located inside the reaction chamber 4 is open for receiving the resulting reaction mixture 8, whereas the other end of the tube which is located outside the reaction chamber is closed. The phase separator tube 12 comprises in its interior a coalescence enhancing device 13, for example a so-called coalescer or a demister, and at its outside section, preferably in a region close to the closed end of the tube, two outlet openings 14, 15 for draining off the light and heavy phase liquids. The demister or coalescer unit 13 considerably facilitate separation of the light and heavy phases resulting from the aerosol reaction by catalyzing coalecence of the droplets accumulating in the bottom region of the reaction chamber 4 as the reaction mixture 8. The first outlet 14 is located at the upper side of the tube for harvesting the light phase liquid 9 mainly comprising FAAEs and unreacted glycerides, while the second outlet 15 is located at the lower side of the hollow tube for draining off the heavy phase liquid 10 comprising water, excess alcohol, acid catalyst and optionally further ingredients originating from the feedstock.

Thanks to the highly effective action of the demister or coalescer device 13 centrifugation of the crude two-phase reaction mixture is no longer needed for satisfactory separation of the lipidic light phase from the aqueous heavy phase. While the heavy phase 10 may thereafter be subjected to recycling procedures for recovering at least one of alcohol, water and acid catalyst, the light phase 9 is transferred to a trans-esterification unit and subjected to base catalyzed transesterification following state-of-the-art methods such as the method of US 7452515, or optionally using at least part of the technology applied in the esterification process according to the present invention.

In addition to said at least two atomizers feeding fresh feedstock and short chain alcohol (+catalyst), respectively, into the reaction chamber, at least one further atomizer comprising a set of spray nozzles may be provided at the reaction chamber, e.g. for recyling unreacted feedstock material back into the reaction chamber via an external loop. For example, when the FAAE content of the crude biodiesel stream generated in the reaction chamber is less than about 96 percent, at least a portion of said crude biodiesel stream may be recycled into the reaction chamber for another esterification or trans-esterification run, as the case may be.

The reaction chamber of the one or more esterification reactor(s) and likewise of each trans-esterifcation reactor equipped with the atomizer technology should be operated in a way such as to keep the level of the liquid reaction mixture accumulating at the bottom of the reaction chamber constantly below the mounting height of the atomizers or spray nozzles, respectively. Inadvertent flooding of the reaction chamber wherein the spray nozzles would immerse in the crude biodiesel liquid would significantly reduce the reaction efficiency and slow down the overall conversion process.

The heart of the biofuel reactor, i.e. the reaction chamber for esterification or trans-esterification, may be made of a coated steel in order to prevent corrosion damages when used for acidic rather than alkaline conversion processes.

In order to comply with requirements for an increased biodiesel production volume two or more biofuel reactors may be connected in parallel to each other in order to allow for a higher volume throughput. But even in such a multiple biofuel reactor arrangement it is contemplated that each reactor, or each reaction chamber, respectively, may be operated independently from one another.

The versatility of the modular biofuel reactor concept of the present invention allows to quickly adjust the throughput capacity to a customer's needs by changing the number of biofuel reactors and/or the number of atomizers and/or spray nozzles per each reaction chamber, thus significantly contributing to cutting production costs and to rendering the resulting biodiesel cost-competitive relative to fossile liquid fuels. Of course, this modular biofuel reactor concept considerably facilitates carrying out repair work onsite if required.

The core step of the biodiesel production process is the chemical conversion of fats or fatty acids into their respective alkyl esters in the gaseous phase within the reaction chamber. The atomization of the reaction partners prior to getting into contact with each other enables fairly complete conversion of the fat/oil/FFA feedstock into biodiesel, approaching 100 percent stoichiometric molar conversion. The biofuel reactor can therefore be run continuously wherein the esterification reaction and optionally also the trans-esterification reaction is accomplished within extremely short periods of time, e.g. within a contact or residence time of only a few seconds, for example 10 seconds or less, and typically within a residence time of less than a minute.

The apparatus for carrying out the present invention may comprise means for cleaning the biofuel reactor plant on-site, preferably including means for cleaning the atomizers and spray nozzles without dismantling, and especially means for applying an inert gas backflush to said nozzles, the inert gas optionally being excess nitrogen recovered from the one or more reaction chambers. Also, the biofuel reactor 1 may be further equipped with a demister or coalescer unit 16 in a top region of the reaction chamber 4, in order to prevent aerosol droplets from exiting the reaction chamber when recovering excess inert gas via an outlet 17 located on top of the reaction chamber 4. The present apparatus may further be equipped with a phase level monitoring and controlling device 18 located in the integrated phase separator unit 11 which closely cooperates with the atomizer devices 2,6.

It is a major advantage of the present biodiesel production process that the fat/oil/FFA feedstock may be varied as desired, i.e. allowing a costumer to mix different biofuel feedstocks such as animal fat and corn or soybean oil, while the process will still be able to generate high quality, widely usable premium biodiesel.

### Example 2: Trans-esterification of glycerides

According to the present invention it is preferred to process animal or vegetable fat or oil feedstock or a mixture thereof, wherein the feedstock has a high FFA content, i.e. an FFA content of 15% by weight or more, preferably 50% wt. or more and up to 100% FFA, relative to the total feedstock material. In industrial practice the feedstock will most times be a mixture of FFA and glycerides along with up to 10% by weight of impurities such as solids, unsaponifiable fatty acids and esters, waxes, various non-glyceride lipids, mucilage substances, proteins and other impurities.

It is preferred that the feedstock material for trans-esterification be substantially free of FFAs and may, for example, be the lipidic light phase mixture of FAAEs and glycerides obtained after acidic esterification of FFA content from a high FFA containing animal or vegetable fat/oil feedstock, as described above.

The feedstock containing glycerides and optionally FAAEs and minor amounts of impurities may be fed into a trans-esterification reactor equipped with atomizer devices for vaporizing the lipidic substrate on one hand and the alcohol plus base catalyst component on the other hand. The arrangement of the atmozier devices may be chosen identical or similar to the one applied in the esterfication reactor. The nozzles may be single fluid or binary fluid nozzles and the size or reaction volume of the reactor may be up to 5 times the size or reaction volume of the esterification reactor. Each spray nozzle may be operated independently from each other, and in case of single fluid pressurized nozzles a differential pressure drop of between 4 and 10 bar may be chosen. The spray nozzles can have different diameters, for example between 1 and 4 millimeters.

Trans-esterification may be carried out similar to the method disclosed in US 7452515 or similar to the acidic esterification reaction described above, with the exception that the catalyst is a base catalyst such as potassium hydroxide (KOH). The molar ratio of short chain alcohol to catalyst may be varied depending upon the given circumstances and may be adjusted to a value somewhere in a range of 3:1 to 25:1 of alcohol to catalyst. Since KOH is better soluble in short chain alcohols than NaOH and may later on be used as a sulfate salt for addition to fertilizers, KOH is usually preferred as an alkaline catalyst for trans-esterification of triglyceride lipids.
Where standard single fluid nozzles are used for vaporization of the liquid feed components the reaction chamber my be supplied with an inert gas through another inlet which may also be a pressurized nozzle, in order to reduce the risk of generating an explosive atmosphere. When pneumatic binary fluid nozzles are used the inert gas carrier applied for operating the nozzles will typically supply the reaction chamber with a sufficient amount of inert gas thus rendering an additional inlet for inert gas supply unnecessary.

Also, the crude reaction product generated in the reaction chamber of the transesterification reactor may be transferred to an external polyol separator unit which is in fluid communication with the biofuel reactor, or may be separated already inside the biofuel reactor using the novel phase separation equipment described above. The resulting lipidic light phase being a crude biodiesel product primarily comprises the FAAEs generated by trans-esterification plus the FAAEs from the preceding acidic esterification (if applicable), plus side products such as low amounts of glycerol methyl esters, unreacted glycerides, small amounts of alcohol, and lipidic impurities. Usually the side products, unreacted ingredients and other impurities amount to about 5% by weight or less, relative to the total reaction mixture. The heavy phase primarily comprises glycerin released by cleavage of the glycerides during the trans-esterification process, together with the major part of excess alcohol and catalyst, and possibly some impurities.

The phase separating step for removing the heavy phase from the crude biodiesel stream may be carried out externally, i.e. outside the trans-esterification reactor, using for example phase separation by gravitation.

The crude biodiesel stream exiting the biofuel reactor or the polyol separator, as the case may be, may then be subjected to one or more water washing steps at a combined washing and wash water separating unit. Separation of the aqueous phase from the water-insoluble biodiesel phase can be performed using, for example, a gravity separator. Suitable equipment is known in the art.

The wash water separator unit may comprise a mixing device in order to ensure thorough mixing of the water and biodiesel phases, enabling removal of essentially all water-soluble impurities still present in the crude biodiesel, such as potassium, mono-glycerides, and di-glycerides. After the washing and separating step about 2 % by weight of water may remain in the washed crude biodiesel stream. Suitable separators to perform this kind of purification are known in the art.

If required, the water-washed crude biodiesel stream may be exposed to another washing step in another washing and separating device using an acidic aqueous solution, for example a diluted sulfuric acid solution, in order to facilitate removal of catalyst, e.g. potassium salt, and possibly still present unreacted mono- and di-glycerides. Acidification of the alkaline crude biodiesel liquid to a pH value of 3.0 - 3.5 will allow precipitation of potassium salts, for example of potassium sulfate K2SO4, which may be recovered and sold as a fertilizer or as an additive to a fertilizer.

The water-washed crude biodiesel may then be subjected to a drying step comprising heating the crude biodiesel up to a temperature of typically between 110 and 135 degrees centigrade, which is below the boiling temperature of the water-free biodiesel. The heating can be accomplished by means of a steam heat exchanger causing the remaining wash water to evaporate and to separate from the crude biodiesel. The evaporated water may be recylced into the water washing unit or into another process unit where water is required.

Thereafter, the dried biodiesel may be allowed to cool down to about 20 C or less, typically using a conventional cooler unit. The cooler unit can be combined with a shell and tube heat exchanger or with a plate and frame heat exchanger. In order to save costs the thermal load removed by the cooler may be recylced into the heat exchanger for performing the biodiesel drying step.

After cooling, the resulting biodiesel product may be subjected to a filtering step for removal of solid particles that may still have remained in the crude biodiesel product, yielding a pre-final or final biodiesel liquid. The filter can be a pocket filter, also known as a bag filter, and can have, for example, a mesh size of between 1 and 100 micrometers, and typically of between 10 and 20 micrometers.

For removing non-solid impurities from the final biodiesel and in order to provide premium quality biodiesel, the filtered biodiesel stream may be subjected to one or more final rectification or distillation steps in order to obtain the desired premium biodiesel fraction or fractions.
The biodiesel production facility may comprise further machinery and equipment for purification of the raw materials as well as for the purification of liquid streams exiting the biofuel reactors, and also for recovering part or all of the non-biodiesel chemical compounds present in one or more of the liquid streams generated during the present biodiesel production process.

**LIST OF REFERENCE NUMBERS**

| | |
|---|---|
| 1 | Biofuel reactor |
| 2 | Atomizer device for fat/oil/FFA feed |
| 3 | Nozzles for fat/oil/FFA feed |
| 4 | Reaction chamber |
| 5 | Nozzles for alcohol+catalyst feed |
| 6 | Atomizer device for alcohol+catalyst feed |
| 7 | Aerosol cloud |
| 8 | Crude reaction mixture |
| 9 | Lipidic light phase |
| 10 | Alcoholic heavy phase |
| 11 | Phase separator |
| 12 | Hollow tubular body of phase separator |
| 13 | Demister or coalescer |
| 14 | Upper outlet for obtaining light phase |
| 15 | Lower outlet for obtaining heavy phase |
| 16 | Demister or coalescer in top region of reaction chamber |
| 17 | Top outlet for draining off excess inert gas |
| 18 | Phase level monitoring and controlling device |

## Claims

1. A method of making a liquid biofuel product from a vegetable or animal oil or fat feedstock, wherein the feedstock comprises free fatty acids (FFA) in an amount of at least 5 % by weight, preferably of at least 25% by weight, the method comprising a step of acid catalyzed FFA esterification and a step of base catalyzed trans-esterification of glycerides present in the feedstock material, and at least one more processing step selected from the group consisting of purification, recycling and recovery of ingredients or reaction products, **characterized in that**
a) in a first step esterification of the FFA is carried out in a first biofuel reactor equipped with binary fluid pneumatic nozzles utilizing an inert gas as a carrier gas for generating and feeding aerosols of a liquid FFA-rich oil or fat component and of an alcohol component into a head space of the reactor, the alcohol component comprising at least one short chain (C1 - C5) alcohol optionally together with a catalyst, and allowing the esterification reaction to take place thus yielding a first reaction mixture; and
b) in a second step a phase separation of the first reaction mixture is carried out to yield a lipidic light phase comprising fatty acid alkyl esters (FAAE) and unreacted glycerides, and a heavy phase comprising excess alcohol, water, and optionally catalyst;
wherein the phase separation of the first reaction mixture is carried out in a bottom space inside the first reactor by means of an integrated phase separator device comprising at least one demister or coalescer unit.

2. The method according to claim 1, wherein
- in a third step the lipidic light phase obtained by step b) is transferred to a second biofuel reactor and subjected to - optionally base catalyzed - transesterification of the glycerides in an aerosol gas phase generated by atomizer nozzles feeding the lipidic light phase containing the glycerides into a head space of said second reactor, and allowing the transesterification reaction to take place thus yielding a second reaction mixture; and wherein
- in a fourth step said second reaction mixture is separated into a light phase comprising a crude biodiesel product mainly composed of a mixture of FAAEs obtained by esterification and trans-esterification, and a heavy phase mainly comprising excess alcohol, glycerin and optionally base catalyst.

3. The method according to claim 1 or 2, wherein the feedstock material is subjected to a least one purification step prior to entering the first biofuel reactor, said purification step directed to the removal of a component selected from the group consisting of waxes, unsaponifiables, proteins, gumming substances, solid particles, water.

4. The method according to any one of claims 1 to 3, wherein the crude biodiesel product resulting from the esterification and trans-esterification reactions is subjected to at least one purification step directed to the removal of at least one component selected from the group consisting of glycerol, alcohol, catalyst, unreacted mono- and diglycerides, waxes, unsaponifiables, proteins, gumming substances, solid particles, water.

5. The method according to any one of claims 1 to 4, wherein the esterification or trans-esterification reactions are caried out at a temperature selected from within a range of from 60 C to 75 C.

6. The method according to any one of claims 1 to 5, wherein the aerosols produced by the pneumatic binary fluid nozzles have an average droplet size of less than 100 um, typically of about 40 to about 80 um, and frequently of about 50 um.

7. The method according to any one of claims 1 to 6, wherein the reaction time of the esterification or trans-esterification reaction is within a range of from 1 second to 60 seconds, typically within a range of from 15 to 30 seconds.

8. The method according to any one of claims 1 to 7, wherein the conversion rates of either or both of the esterification and trans-esterfication reactions are at or close to 100% and wherein the overall yield of biodiesel exceeds 100% as compared to the overall biodiesel yield achievable from low FFA feedstocks having an FFA content of less than 5% by weight.

9. The method according to any one of claims 1 to 8, wherein at least the steps of esterification and/or transesterification are carried out by continuous mode operation, and preferably also the subsequent steps of purification and recycling.

10. Apparatus for carrying out the method claimed in any one of claims 1 to 9, comprising:
a) a first biofuel reactor (1) having a reaction chamber (4) equipped with at least two atomizer devices (2,6), each one comprising one or more binary fluid pneumatic nozzles (3,5), for generating and feeding aerosols (7) of both an FFA-rich fat or oil component and an alcohol component into a head space of said first reactor for carrying out an esterification reaction of the FFAs to yield a first reaction mixture (8); and
b) a phase separation unit (11) integrated in the first biofuel reactor (1) for separating the first reaction mixture (8) into a light phase and a heavy phase, which phase separation unit (11) comprises a hollow tubular body (12) arranged in a horizontal direction relative to the vertically positioned reaction chamber (4) of the first reactor, wherein the hollow tubular body (12) extends from inside the first reactor to the outside and has a first open end located inside the reactor for receiving the reaction mixture (8) to be separated, and a second closed end located outside the reactor, the outside part of the tubular body having one outlet (14) for draining off the light phase (9) and another outlet (15) for draining off the heavy phase (10), while the inside part of the tubular body further comprises at least one demister or coalescer device (13) arranged inside its hollow body and close to its first open end.

11. Apparatus according to claim 10, which further comprises
- a second biofuel reactor equipped with at least two atomizer devices, each one comprising one or more single fluid pressurized nozzles or one or more binary fluid pneumatic nozzles, for generating and feeding aerosols of a glyceride-rich fat or oil component and of an alcohol component into a head space of said second biofuel reactor, for carrying out a trans-esterification reaction of glycerides to yield a second reaction mixture; and
- conduits establishing a fluid communication between the first and second reactors, and means for passing liquids from the first to the second reactor, and optionally means for passing liquids from the second to the first reactor.

12. The apparatus according to claim 11, which further comprises
- means for purifying the light phase fluids exiting either or both the first and second biofuel reactors; and optionally
- means for recovering at least a part of unreacted starting materials and for recycling them into the process again or for further purifying them for subsequent use or sale.

13. The apparatus according to any one of claims 10 to 12, which is further equipped with at least one of the following devices:
- a phase level monitoring and controlling device (17); and
- an outlet (18) on top of the reaction chamber (4) for draining off excess inert gas introduced into the reaction chamber via the pneumatic binary fluid nozzles (3, 5).
